# EUROPÄISCHE PATENTSCHRIFT

(11) **EP 0 774 401 B1**
(45) Veröffentlichungstag und Bekanntmachung des Hinweises auf die Patenterteilung: **19.12.2001**
(21) Anmeldenummer: 96116825.9
(22) Anmeldetag: 19.10.1996
(51) Int. Cl.: B62D 25/08

(54) **Vorbau für einen Personenkraftwagen mit einer Tragstruktur**
Front part for automotive vehicles incorporating a support structure
Partie avant pour véhicules automobiles comportant une structure de support

(30) Priorität: 20.11.1995 DE 19543193
(43) Veröffentlichungstag der Anmeldung: 21.05.1997
(73) Patentinhaber: DaimlerChrysler AG, 70567 Stuttgart (DE)
(72) Erfinder: Baumann, Karl-Heinz, 71149 Bondorf (DE)

(56) Entgegenhaltungen:
- DE-A- 3 038 920
- DE-A- 4 104 894
- FR-A- 2 271 105

## Beschreibung

Die Erfindung betrifft einen Vorbau für einen Personenkraftwagen mit einer Tragstruktur, die für beide Fahrzeugseiten jeweils einen Längsträgerabschnitt und einen Radlauf sowie mehrere Versteifungsabschnitte aufweist, wobei an die Tragstruktur von unten ein Integralträger zur Aufnahme von Teilen einer Vorderradachsanordnung angebunden ist.

Ein solcher Vorbau ist bei Mercedes-Benz Personenkraftwagen bekannt. Ein solcher Vorbau weist zwei mehrteilig aufgebaute Längsträger auf, die in ihrem hinteren Bereich an eine Stirnwand der Fahrgastzelle anschließen. Entlang dieser Längsträger schließt auf jeder Seite nach oben jeweils ein Radlaufblech an, das in seinem hinteren Bereich an die Stirnwand und an eine A-Säule der Fahrgastzelle angebunden ist. Die beiden Radlaufbleche sind relativ dünnwandig ausgeführt und im Bereich der Stoßdämpferaufnahme sowie im Bereich der Anbindung verschiedener Vorderachsteile durch zusätzliche Versteifungsteile entsprechend verstärkt. Im oberen Bereich des Radlaufbleches ist eine zusätzlich eingeschweißte Radlaufverstärkung vorgesehen, die bei einem Frontalaufprall neben den Längsträgern eine zweite Aufprallebene bilden.

Die DE 24 26 050 C2 offenbart einen Vorbau für einen Personenkraftwagen, an dessen Unterseite ein rechteckiger, als Integralträger für ein Antriebsaggregat dienender Unterrahmen befestigt ist. Der Vorbau weist außerdem einen versteiften Radlauf auf.

Aus der AT 187 433 ist ein Vorbau für einen Personenkraftwagen bekannt, der einen als mehrteilige Blechkonstruktion ausgeführten Radlauf aufweist. An einer Unterseite des Radlaufes ist ein kastenförmiger Längsträger gebildet, der aus einer horizontalen Abkantung des Radlaufes einerseits und einer auf diese aufgesetzten Längsprofilschale andererseits zusammengesetzt ist.

Die DE 29 44 538 A1 zeigt einen Vorbau für einen Personenkraftwagen, dessen Radlauf an seiner unteren Innenseite mit einer kastenförmigen Versteifung versehen ist, die durch ein auf die Innenseite des Radlaufes aufgesetztes U-förmiges Trägerprofil gebildet ist.

Aus der DD 285 316 A5 ist auch ein Vorbau für einen kleinen Personenkraftwagen bekannt. Aus Platzgründen ist dieser Vorbau längsträgerlos ausgeführt. Eine ausreichende Steifigkeit des Vorbaus wird durch ein Blechprofilsystem auf beiden Seiten des Vorbaus gebildet, das in Form eines geschlossenen Kastenprofils ausgebildet ist. Sicherheitstechnischen Anforderungen insbesondere im Hinblick auf Frontalaufprallbelastungen wird dieser Vorbau nicht gerecht.

Aufgabe der Erfindung ist es, einen Vorbau der eingangs genannten Art zu schaffen, der einerseits einen hohen Sicherheitsstandard gewährleistet und andererseits gegenüber bekannten Vorbaustrukturen erheblich einfacher herstellbar ist.

Diese Aufgabe wird dadurch gelöst, daß auf jeder Fahrzeugseite der Radlauf, der Längsträgerabschnitt sowie wenigstens teilweise die Versteifungsabschnitte in einer einstückigen, stabilen Radlaufschale integriert sind, die im Bereich ihrer Unterkante mit einer im montierten Zustand horizontalen Abkantung zur Anbindung des Integralträgers versehen ist. Durch die erfindungsgemäße Lösung wird ein erheblich geringerer Fügeaufwand bei Beibehaltung des hohen Sicherheitsstandards erreicht, der bei Mercedes-Benz Personenkraftwagen gewährleistet ist. Die Erfindung schafft zudem einen im Vergleich zum Stand der Technik verbessert deformierbaren Vorbau trotz der Verwendung eines Integralträgers. Beim Stand der Technik führte die Anbindung eines Integralträgers an die beiden Vorbaulängsträger zu einer äußerst steifen Blockbildung, die unter Umständen eine frühzeitige Deformation der Fahrgastzelle nach sich zieht. Durch die erfindungsgemäße Lösung hingegen bilden die Radlaufschalen eine eigensteife Hauptstruktur, die wenig Bauraum beansprucht. Die einteilige Gestaltung der Radlaufschale reduziert Füge- und Schweißvorgänge erheblich. Das zusätzliche Ein- und Ansetzen von Versteifungsteilen wird weitgehend reduziert.

In Ausgestaltung der Erfindung weist die Radlaufschale eine Wandstärke von mehr als 1,5 mm auf. Durch die erhöhte Wanddicke wird die Eigensteifigkeit der Radlaufschale geschaffen, wobei das Gesamtgewicht des erfindungsgemäßen Vorbaus etwa mit dem Gesamtgewicht eines bekannten Vorbaus übereinstimmt.

In weiterer Ausgestaltung der Erfindung ist im Bereich der Anbindungspunkte des Integralträgers an die Abkantung der jeweiligen Radlaufschale jeweils ein Schließteil zur Bildung eines geschlossenen Hohlprofiles mit der Abkantung angesetzt. Dadurch wird im Bereich der Anbindungspunkte des Integralträgers eine weitere erhöhte Steifigkeit der Radlaufschale erzielt.

In weiterer Ausgestaltung der Erfindung ist ein Schließteil in einem an eine Stirnwand anschließenden hinteren Bereich der Radlaufschale derart gestaltet, daß sich mit der Abkantung der Radlaufschale ein zur Stirnwand erweitertes, trichterförmiges Hohlprofil ergibt. Dadurch wird eine kraftübertragende Anbindung an die Stirnwand erzielt.

In weiterer Ausgestaltung der Erfindung weist ein Schließteil in einem vorderen Bereich der Radlaufschale Anbindungsflächen für einen mit Deformationselementen versehenen Querträger auf. Dadurch ist es möglich, unter Zwischenschaltung entsprechender Deformationselemente einen Stoßfängerbiegeträger vor den Radlaufschalen anzuordnen.

In weiterer Ausgestaltung der Erfindung sind die beiden Radlaufschalen mit Versteifungsrippen versehen. Dadurch wird die Steifigkeit der Radlaufschalen weiter erhöht.

In weiterer Ausgestaltung der Erfindung sind die beiden Radlaufschalen aus Leichtmetall hergestellt, an denen Aufnahmen zur Halterung und Befestigung von Funktionselementen einstückig angeformt sind. Die erfindungsgemäße Gestaltung des Vorbaus schafft die Möglichkeit des Einsatzes von Leichtmetallen, da eine wesentlich geringere Anzahl von Fügeschritten zur Fertigstellung des Vorbaus vorgenommen werden muß.

Weitere Vorteile und Merkmale der Erfindung ergeben sich aus den Unteransprüchen sowie aus der nachfolgenden Beschreibung eines bevorzugten Ausführungsbeispiels der Erfindung, das anhand der Zeichnungen dargestellt ist.
- Fig. 1: zeigt schematisch eine Seitenansicht einer Ausführungsform eines erfindungsgemäßen Vorbaus, aus der insbesondere die einstückige Radlaufschalenkonstruktion erkennbar ist,
- Fig. 2: einen Schnitt durch die in Fahrtrichtung linke Hälfte des Vorbaus nach Fig. 1 entlang der Schnittlinie II-II in Fig. 1,
- Fig. 3: einen weiteren Schnitt ähnlich Fig. 2, jedoch entlang der Schnittlinie III-III in Fig. 1,
- Fig. 4: einen weiteren Schnitt entlang der Schnittlinie IV-IV in Fig. 1, und
- Fig. 5: einen Schnitt durch die Radlaufschalenkonstruktion entlang der Schnittlinie V-V in Fig. 1.

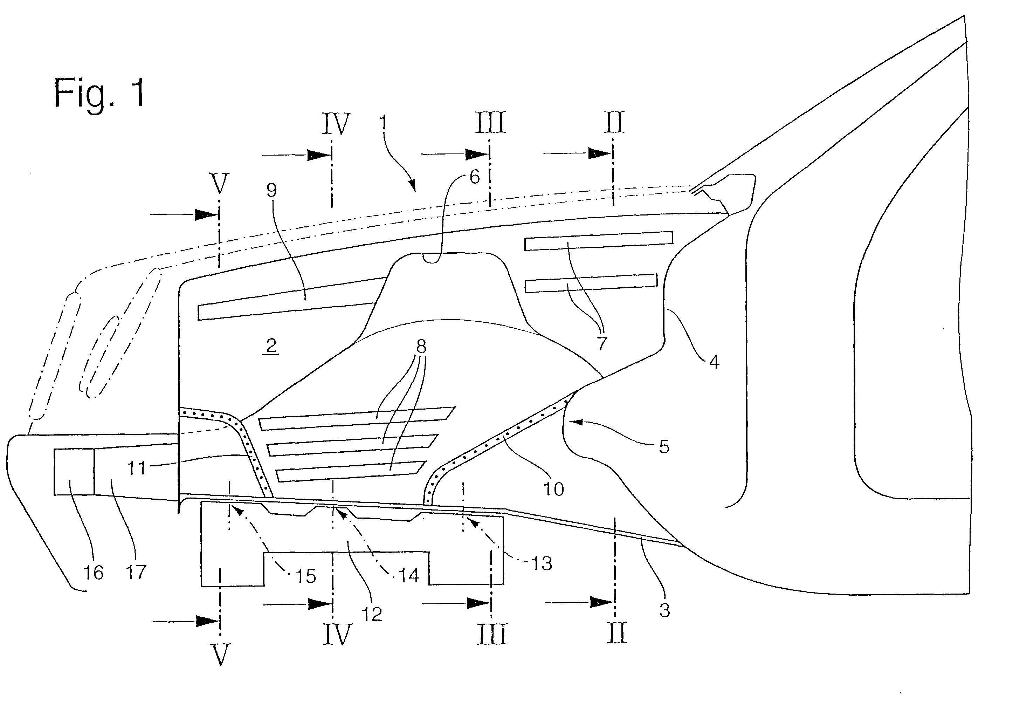

Ein Personenkraftwagen nach Fig. 1 weist einen Vorbau (1) auf, der nach vorne an eine Fahrgastzelle des Personenkraftwagens anschließt. Der Vorbau (1) weist eine steife Tragstruktur zur Aufnahme einer Vorderachsanordnung sowie eines Antriebsaggregates und mehrerer zusätzlicher Funktionselemente auf, die bei einem Frontalaufprall energieabsorbierend deformierbar ist. Der erfindungsgemäße Vorbau gemäß Fig. 1 verzichtet auf eine übliche Längsträgerkonstruktion und weist anstatt dessen auf jeder Seite jeweils eine einstückige Radlaufschale (2) auf, die aus Blech mit einer Wandstärke zwischen 1,75 mm und 2,5 mm hergestellt ist. Die beiden Radlaufschalen (2) auf jeder Seite des Vorbaus (1) sind identisch zueinander, jedoch entsprechend spiegelsymmetrisch gestaltet. In jeder Radlaufschale (2) ist sowohl ein Radlauf als auch ein Längsträgerabschnitt integriert. Die Radlaufschalen (2) erstrecken sich jeweils über die gesamte Länge des Vorbaus (1) und schließen in ihrem hinteren Bereich an eine Stirnwand (4) der Fahrgastzelle an. In ihrem unteren Bereich sind die Radlaufschalen (2) mit jeweils einer horizontal nach innen verlaufenden Abkantung (3) versehen, die sich ebenfalls über die gesamte Länge der Radlaufschalen (2) erstrecken. An diese Abkantungen (3) wird von unten ein an sich bekannter Integralträger (12) angeschraubt oder in anderer Art und Weise befestigt, der insbesondere zur Aufnahme von Teilen einer Vorderachsanordnung dient. Je nach Ausführungsbeispiel ist auf dem Integralträger zusätzlich das Antriebsaggregat für den Personenkraftwagen befestigt.

Der Integralträger (12) ist auf jeder Seite über jeweils drei Anbindungspunkte (13, 14, 15) mit der Abkantung (3) der jeweiligen Radlaufschale (2) verbunden. Die drei Anbindungspunkte (13, 14, 15) sind dabei längs der Abkantung (3) der Radlaufschale (2) in Abstand hintereinander angeordnet.

Als Stirnwand (4) wird eine Ellipsoidstirnwand mit einer erhöhten Blechdicke eingesetzt, die auf Höhe der beiden Radlaufschalen (2) nach vorne ausgebauchten Bombierungen (5) aufweist. Die beiden Radlaufschalen (2) sind über die gesamte Höhe der Stirnwand (4) mit dieser verschweißt.

Die Oberkante jeder Radlaufschale (2) erstreckt sich von der Stirnwand (4) aus etwa horizontal nach vorne. In diesem Bereich ist der Kotflügel der Karosserie anschraubbar, wobei aufgrund der dicken Blechstärke der Radlaufschale (2) Verstärkungselemente im Bereich der Anschraubpunkte entfallen können. Jede Radlaufschale (2) weist einen sich von der Stirnwand (4) aus nach vorne erstreckenden mittleren Bereich auf, der quer zur Fahrtrichtung nach innen gezogen ist und den Radeinbau darstellt. Auf Höhe einer Stoßdämpferaufnahme ist in jeder Radlaufschale (2) einstückig ein Dämpferdom (6) ausgeformt. Dieser Dämpferdom (6) weist bereits eine ausreichende Steifigkeit auf, so daß auch im Bereich des Dämpferdomes (6) auf zusätzliche Verstärkungen werden kann. Zur Versteifung des oberen Längsbereiches der Radlaufschale (2) sind zwischen der Stirnwand (4) und dem Dämpferdom (6) zwei längs verlaufende und parallel zueinander ausgerichtete Versteifungsrippen (7) vorgesehen. Vom Dämpferdom (6) aus nach vorne ist eine weitere Versteifungsrippe (9) vorgesehen. Der Radeinbau weist oberhalb der Abkantung (3) für die Andeutung eines Längsträgerabschnittes drei Versteifungsrippen (8) auf. Diese sind in Fig. 4 jedoch nicht erkennbar.

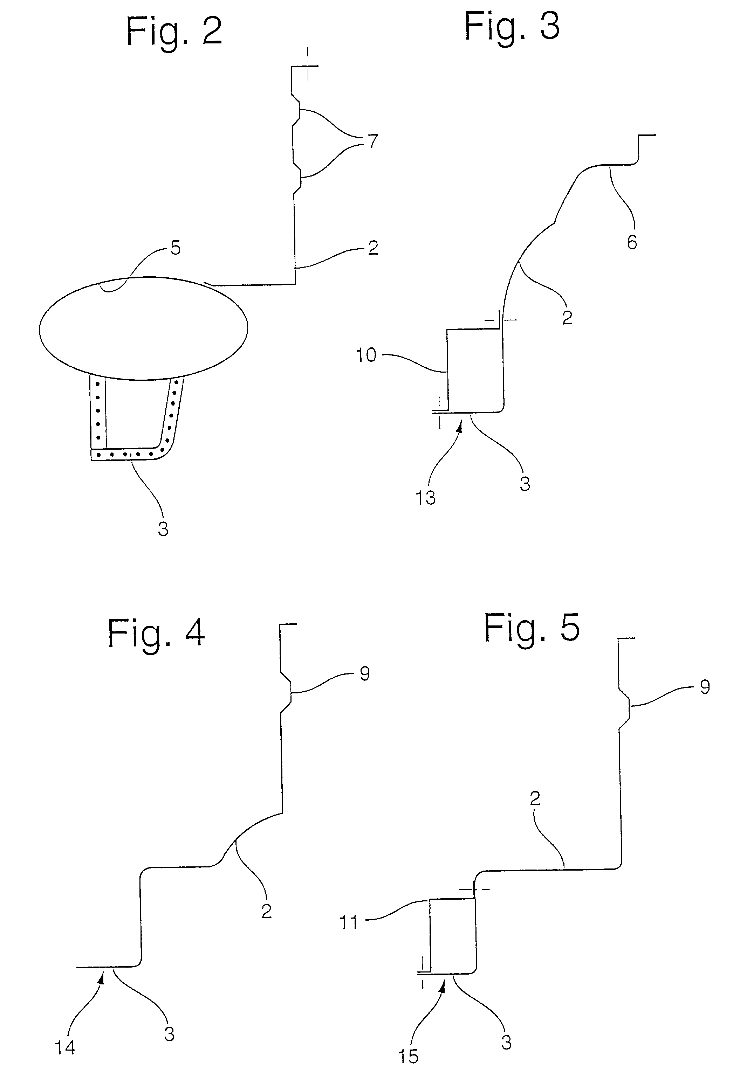

Im Bereich des hinteren Anbindungspunktes (13) des Integralträgers (12) ist die Abkantung (3) durch ein Schließblech (10) ergänzt (Fig. 3), das mit der horizontalen Abkantung (3) ein geschlossenes Hohlprofil bildet. Wie aus Fig. 1 erkennbar ist, erweitert sich dieses geschlossene Hohlprofil zur Stirnwand (4) hin trichterförmig, wodurch eine gute Krafteinleitung von Belastungen auf den Integralträger (12) in den Bereich der Stirnwand (4) erfolgen kann. Das durch das Schließblech (10) und die Abkantung (3) gebildete Hohlprofil bildet darüber hinaus bei einem Frontalaufprall ein der Stirnwand (4) vorgeschaltetes, energieabsorbierendes Deformationselement.

Im Bereich eines vorderen Anbindungspunktes (15) des Integralträgers (12) an die Abkantung (3) der Radlaufschale (2) ist ein weiteres Schließteil (11) vorgesehen, das zur Versteifung der Radlaufschale (2) im Bereich der vorderen Integralträgeraufnahme beiträgt und darüber hinaus Anlage- und Anschraubflächen für einen den Radlaufschalen (2) vorgeschalteten Stoßfängerbiegeträger (16) bildet. Der Stoßfängerbiegeträger (16) ist als Querträger ausgebildet und ist unter Zwischenschaltung von Deformationselementen (17) stirnseitig an die Radlaufschalen (2) angeschraubt. Die Einschweißung des vorderen Schließteiles (11) kann mittels einer Lehre erfolgen, wodurch Toleranzen quer zur Fahrzeuglängsrichtung ausgeglichen werden können. Die Steifigkeit des Vorbaus wird bei der erfindungsgemäßen Lösung nicht bereits durch die Radlaufschalen (2) allein, sondern erst durch die feste Anbindung des Integralträgers (12) von unten an die beiden Radlaufschalen (2) erzielt. Der Integralträger (12) wird dabei vorzugsweise mit den Abkantungen (3) verschraubt.

Bei einer nicht dargestellten Ausführungsform der Erfindung sind die einteiligen Radlaufschalen (2) aus Leichtmetall als Gußteile hergestellt, wobei das jeweilige Gußteil durch entsprechende Verrippungen und Variationen der Wandstärke an den geeigneten Stellen entsprechend versteift ist. Vorteilhaft sind Halterungen und Befestigungsstellen für Funktionselemente des Personenkraftwagens in diese Radlaufschalen integriert. Bei der Leichtmetallausführung der Radlaufschalen können die Schließteile entfallen. In diesen Bereichen müssen lediglich geeignete Versteifungsmaßnahmen wie Verrippungen oder ähnliches integriert werden, um eine ausreichende Steifigkeit zu erzielen. Dadurch wird die gesamte tragende Vorbaustruktur bereits durch die jeweils einstückigen Radlaufschalen geschaffen.

## Patentansprüche

1. Vorbau für einen Personenkraftwagen mit einer Tragstruktur, die für beide Fahrzeugseiten jeweils einen Längsträgerabschnitt und einen Radlauf sowie mehrere Versteifungsabschnitte aufweist, wobei an die Tragstruktur von unten ein Integralträger zur Aufnahme von Teilen einer Vorderradachsanordnung angebunden ist,
**dadurch gekennzeichnet,**
**daß** auf jeder Fahrzeugseite der Radlauf, der Längsträgerabschnitt sowie wenigstens teilweise die Versteifungsabschnitte in einer einstückigen, stabilen Radlaufschale (2) integriert sind, die im Bereich ihrer Unterkante mit einer im montierten Zustand horizontalen Abkantung (3) zur Anbindung des Integralträgers (12) versehen ist.

2. Vorbau nach Anspruch 1,
**dadurch gekennzeichnet,**
**daß** die Radlaufschale (2) eine Wandstärke von mehr als 1,5 mm aufweist.

3. Vorbau nach Anspruch 2,
**dadurch gekennzeichnet,**
**daß** im Bereich der Anbindungspunkte (13, 14, 15) des Integralträgers (12) an die Abkantung (3) der jeweiligen Radlaufschale (2) jeweils ein Schließteil (10, 11) zur Bildung eines geschlossenen Hohlprofiles mit der Abkantung (3) angesetzt ist.

4. Vorbau nach Anspruch 3,
**dadurch gekennzeichnet,**
**daß** ein Schließteil (10) in einem an eine Stirnwand (4) anschließenden hinteren Bereich der Radlaufschale (2) derart gestaltet ist, daß sich mit der Abkantung (3) der Radlaufschale (2) ein zur Stirnwand (4) erweitertes, trichterförmiges Hohlprofil ergibt.

5. Vorbau nach Anspruch 4,
**dadurch gekennzeichnet,**
**daß** ein Schließteil (11) in einem vorderen Bereich der Radlaufschale (2) Anbindungsflächen für einen mit Deformationselementen (17) versehenen Querträger (16) aufweist.

6. Vorbau nach einem der vorhergehenden Ansprüche,
**dadurch gekennzeichnet,**
**daß** die beiden Radlaufschalen (2) mit Versteifungsrippen (7, 8, 9) versehen sind.

7. Vorbau nach einem der vorhergehenden Ansprüche,
**dadurch gekennzeichnet,**
**daß** die beiden Radlaufschalen (2) aus Leichtmetall hergestellt sind, an denen Aufnahmen zur Halterung und Befestigung von Funktionselementen einstückig angeformt sind.

## Claims

1. Front structure for a motor car with a support structure, which for both vehicle sides has a side member section and a wheel arch as well as several stiffening sections, wherein an integral member for receiving components of a front axle arrangement is connected on the support structure from below,
**characterised in that**
on each vehicle side the wheel arch, the longitudinal carrier and at least partially the stiffening sections are integrated into a one-component stable wheel arch shell (2), which in the area of its lower edge is equipped with a chamfered area (3) which is horizontal in its mounted state for connecting the integral member (12).

2. Front structure according to Claim 1
**characterised in that**
the wheel arch shell (2) has a wall thickness of more than 1.5 mm.

3. Front structure according to Claim 2
**characterised in that**
in the area of the connecting points (13, 14, 15) of the integral member (12) in relation to the chamfered area (3) of the respective wheel arch shell (2) a closing component (10, 11) for the purpose of forming a closed hollow profile with the chamfered area (3) is positioned.

4. Front structure according to Claim 3
**characterised in that**
a closing component (10) is formed in a rear area of the wheel arch shell (2) connecting to a front wall (4) in such a way that with the chamfered area (3) of the wheel arch shell (2) a funnel-shaped hollow profile extended to the front wall (4) is produced.

5. Front structure according to Claim 4
**characterised in that**
a closing component (11) in a front area of the wheel arch shell (2) has connecting surfaces for a cross member (16) equipped with deformation elements (7).

6. Front structure according to one of the preceding claims
**characterised in that**
the two wheel arch shells (2) are equipped with stiffening ribs (7, 8, 9).

7. Front structure according to one of the preceding claims
**characterised in that**
the two wheel arch shells (12) are manufactured from light alloy, on which mounts for holding and securing functional elements are formed in a one-component way.

## Revendications

1. Partie avant pour une voiture de tourisme comportant une structure de support, qui possède, pour les deux côtés du véhicule, respectivement un tronçon de longeron et un passage de roue ainsi que plusieurs sections de rigidification, dans laquelle un support intégral servant à recevoir des pidses d'un dispositif d'essieu avant est fixé à partir du bas à la structure de support, **caractérisée en ce que** de chaque côté du véhicule le passage de roue, le tronçon de longeron ainsi qu'en partie les sections de rigidification sont intégrés dans une coque monobloc stable de passage de roue (2), qui comporte, au niveau de son bord inférieur, une partie coudée (3) horizontale à l'état monté, pour la fixation du support intégral.

2. Partie avant selon la revendication 1, caractérisie en ce que la coque (2) de passage de roue possède une épaisseur de paroi supérieure à 1,5 mm.

3. Partie avant selon la revendication 2, caractérisie en ce que dans la zone des points de fixation (13,14,15) du support intégral (12) à la partie coudée (3) de la coque respective de passage de roue (2) est monté un élément de fermeture (10,11) servant à former un profilé creux fermé comportant la partie coudée (3).

4. Partie avant selon la revendication 3, **caractérisée en ce qu'**un élément de fermeture (10) dans une partie arrière, qui se raccorde à une paroi frontale (4), de la coque (2) du passage de roue est agencé de telle sorte que l'on obtient, avec la partie coudée (3) de la coque (2) du passage de roue, un profil creux en forme d'entonnoir, qui s'élargit en direction de la paroi frontale (4).

5. Partie avant selon la revendication 4, **caractérisée en ce qu'**un élément de fermeture (11) possède, dans une partie avant de la coque (2) du passage de roue, des surfaces de fixation pour un support transversal (16) pourvu d'éléments de déformation (17).

6. Partie avant selon l'une des revendications précédentes, **caractérisée en ce que** les deux coques (2) des passages de roues sont équipées de nervures de renforcement (7,8,9).

7. Partie avant selon l'une des revendications précédentes, **caractérisée en ce que** les deux coques (2) des passages de roues, dans lesquelles sont formés d'un seul tenant des logements servant à retenir et fixer des éléments fonctionnels, sont réalisées en un métal léger.
